Europäisches Patentamt

(19) European Patent Office

Office européen des brevets

(11) Veröffentlichungsnummer: **0 094 036**
**B1**

(12) # EUROPÄISCHE PATENTSCHRIFT

(45) Veröffentlichungstag der Patentschrift:
**27.08.86**

(51) Int. Cl.⁴: **A 01 D 45/30,** A 01 D 41/08

(21) Anmeldenummer: **83104419.3**

(22) Anmeldetag: **05.05.83**

(54) **Erntebergungsvorrichtung für eine Saatgut-Erntemaschine.**

(30) Priorität: **07.05.82 US 375838**

(43) Veröffentlichungstag der Anmeldung:
**16.11.83 Patentblatt 83/46**

(45) Bekanntmachung des Hinweises auf die Patenterteilung:
**27.08.86 Patentblatt 86/35**

(84) Benannte Vertragsstaaten:
**BE DE FR GB IT**

(56) Entgegenhaltungen:
**DE - C - 933 789**
**FR - A - 2 157 197**
**US - A - 1 206 409**
**US - A - 2 495 417**
**US - A - 2 499 047**

(73) Patentinhaber: **DEERE & COMPANY, 1 John Deere Road, Moline Illinois 61265 (US)**

(72) Erfinder: **Lundahl, Cordell E., 710 N. Sixth W., Logan Utah 84321 (US)**
Erfinder: **West, Neil L., R. R. 1, Bettendorf Iowa 52722 (US)**
Erfinder: **Witzel, Homer Daniel, 1700 Gulf Blvd., Englewood Florida 33533 (US)**

(74) Vertreter: **Sartorius, Peter et al, DEERE & COMPANY European Office, Patent Department Postfach 503 Steubenstrasse 36-42, D-6800 Mannheim 1 (DE)**

## Beschreibung

Die Erfindung bezieht sich auf eine Ernteber-gungsvorrichtung für eine Saatgut-Erntemaschi-ne mit einem ersten auf einer mit Bezug auf die Förderrichtung quer verlaufenden Achse drehbar gelagerten Rotor, der mit als Abstreiforgane ausgebildeten, sich radial erstreckenden Borsten ausgerüstet ist und mit sich radial erstreckenden Borsten eines zweiten auf einer parallel zur ersten Achse verlaufenden Achse angeordneten Rotors zusammenwirkt.

Es ist bereits eine Erntebergungsvorrichtung für eine Saatgut-Erntemaschine bekannt, deren Erntebergungsvorrichtung aus einer antreibbaren Haspel besteht, die oberhalb einer Schlagleisten aufweisenden Trommel vorgesehen ist, die mit Abstand zur Haspel angeordnet ist und somit einen Einlassspalt zur Aufnahme von an Halmen befindlichen Ähren bildet. Die Haspel ist mit zahl-reichen, Gummielemente aufweisenden Schlag-leisten ausgerüstet, die das Herauslösen der Körner aus den Ähren unterstützen sollen. Da die Gummielemente der Schlagleisten sowie die Schlagleisten der Schlagleistentrommel relativ schmal sind, wird nur ein Teil der Oberfläche der Ähren nicht richtig erfasst und somit nicht sämtliche Körner aus den Ähren herausgelöst. Ferner besteht die Gefahr, dass mit einer derartigen Erntebergungsvorrichtung die Ähren von den Halmen abgezogen werden (US-A 2 499 047).

Ferner ist eine Erntebergungsvorrichtung be-kannt (US-A 1 206 409), die aus zwei zusammen-wirkenden Rotoren besteht, die jeweils mit am Aussenumfang gleichmässig verteilten Borsten-büscheln ausgerüstet sind, die jeweils einen relativ grossen Abstand zueinander aufweisen und dazu dienen, lose auf dem Boden liegenden Klee aufzunehmen, um auf diese Weise zu verhindern, dass Saatgut aus dem Klee herausgelöst wird.

Bei einer bekannten Vorrichtung der eingangs aufgeführten Art (US-A 2 495 417) besteht die Erntebergungsvorrichtung zum Ernten von Saat-gut aus zahlreichen nebeneinander angeordne-ten, kreisförmigen Scheiben mit sich radial erstreckenden Abstreifarmen, die jeweils mit den Abstreifarmen der benachbarten Scheibe einen keilförmigen Zwischenraum bilden. Die einzelnen Abstreifarme weisen Rippen auf, die auf die Ähren einwirken sollen, um die Körner aus den Ähren herauszulösen, ohne dass die Ähren von den Halmen getrennt werden. Durch die seitlich herausstehenden Abstreifelemente erhält man eine relativ rauhe bzw. gewellte Oberfläche, die dazu führen kann, dass die Ähren von den Halmen getrennt werden. Diese Wirkung wird noch dadurch unterstützt, dass im Bereich der engsten Stelle zweier gegenüberliegender Abstreifelemente eine Scherwirkung auf die Ähren ausgeübt wird, so dass diese von den Stengeln abgeschnitten werden.

Ferner ist eine Vorrichtung zum Ernten von Mutterkorn der eingangs aufgeführten Art be-kannt (DE-C 933 789), die zum Lösen des Mutterkorns aus seinem Fruchtstand an den Armen einer drehbaren Hapsel umlaufende Bürstenwalzen aufweist, die mit Bürstenwalzen eines Rotors zusammenwirken. Die einzelnen Borsten der Hapsel bzw. des Rotors bilden in Umlaufrichtung eine durchgehende Oberfläche, wobei sie im Stillstand jeweils mit einem Bündel nachfolgender Borsten einen grossen Abstand aufweisen. Auf diese Weise können die einzelnen Körner aus den Ähren zwar impulsartig herausgeschlagen werden, jedoch keine gleichmässige Reibwirkung auf die Ähren ausgeübt werden.

Demgegenüber besteht die Erfindungsaufgabe darin, die antreibbare Borsten aufweisenden Rotoren derart auszubilden und anzuordnen, dass die auf den Halmen befindlichen Ähren auf einfache Weise von den Borsten vollständig und gleichmässig erfasst werden, wobei die Körner durch die von den Borsten erzeugte Reibwirkung aus den Ähren herausgelöst werden. Diese Aufgabe ist dadurch gelöst worden, dass die Borsten der meisten Rotoren kreisförmige, nebeneinanderliegende Scheiben oder ein spiralförmiges Band bilden, die zur Aufnahme des Saatgutes mit jeweils der benachbarten Scheibe bzw. dem Bandteil Zwischenräume aufweisen, wobei die Borsten der Scheiben oder des Bandes derart dicht nebeneinander angeordnet sind, dass sie eine durchgehende Oberfläche bilden. Durch die vorteilhafte Ausbildung der Borsten aufweisenden Rotoren, die aus einzelnen nebeneinander angeordneten Scheiben bzw. einem spiralförmigen Band gebildet sind, können die Ähren mittels des zweiten Rotors in die Zwischenräume zwischen den Scheiben bzw. des Bandes des Rotors bewegt werden, so dass auf die Ähren eine gleichmässige, kontinuierliche Reibwirkung ausgeübt wird, so dass die Körner ohne weiteres aus den Ähren herausgelöst werden können. Die einzelnen Ähren, die nicht in den Zwischenraum zwischen die beiden Rotoren gelangen bzw. in die Zwischenräume der Scheiben oder des spiralförmigen Bandes, können sich gegen die Stirnseite des oberen Rotors anlegen, so dass sie nach unten in die Zwischenräume des unteren Rotors gedrückt werden. Hierzu ist es ferner vorteilhaft, dass die Achse des ersten oberen Rotors etwas vor der Achse des unteren bzw. zweiten Rotors liegt. Durch die Verlagerung des oberen Rotors etwas vor den unteren Rotor wird gewährleistet, dass auch hochstehende Ähren rechtzeitig so weit nach unten gedrückt werden, dass sie ohne weiteres von dem unteren Rotor erfasst werden können, bis sie in die entsprechenden Zwischenräume der einzelnen Scheiben bzw. die durch die Bandabschnitte gebildeten Zwischenräume gelangen.

In weiterer Ausgestaltung der Erfindung ist es vorteilhaft, dass hinter den beiden aus Borsten gebildeten Rotoren in über ein oder mehrere Ge-bläse mit Förderluft beaufschlagbarer Förderka-nal vorgesehen ist, der mit einem Sammelbehälter in Verbindung steht. Da den einzelnen Rotoren mindestens ein Gebläse nachgeordnet ist, das Förderluft in einen Förderkanal leitet, wird sichergestellt, dass die von den Rotoren abgegebenen Körner ohne weiteres in einen Sammelbehälter verlustfrei gelangen. Ferner kann durch das Gebläse an den Rotoren eine Saugwirkung erzielt werden, die das Heranziehen der Ähren in den Spalt zwischen die beiden Rotoren unterstützt, um auf diese Weise ein einwandfreies Erfassen der Ähren durch die Rotoren zu gewährleisten.

Ferner ist es vorteilhaft, dass die Seitenwände jeweils zweier aus den Borsten gebildeter, eine durchgehende, kreisförmige Oberfläche aufweisender Scheiben einen keilförmigen Einlassspalt zur Aufnahme des Erntegutes bilden. Hierdurch kann die Reibwirkung verbessert werden und das Herauslösen des Saatgutes aus den Ähren effektiver gestaltet werden. Weiterhin ist es vorteilhaft, dass die Rotoren gegenläufig mit einer Umfangsgeschwindigkeit zwischen 18 und 27 m/sec angetrieben werden.

In weiterer Ausgestaltung der Erfindung ist es vorteilhaft, dass die einzelnen Scheiben starr oder über ein Taumelscheibengetriebe mit der Achse verbunden sind, so dass die Scheiben gegenüber der Achse relativ bewegbar sind. Durch die Verwendung eines Taumelscheibengetriebes können die Scheiben eine relative Bewegung gegenüber der Achse ausführen, so dass der Spalt bzw. Zwischenraum und somit die Seitenwände der einzelnen Scheiben relativ langsam an den Ähren entlanggeführt werden, um dadurch die Körner aus den Ähren herauslösen.

In der Zeichnung sind mehrere Ausführungsbeispiele einer Saatgut-Erntemaschine nach der Erfindung schematisch dargestellt. Es zeigt:

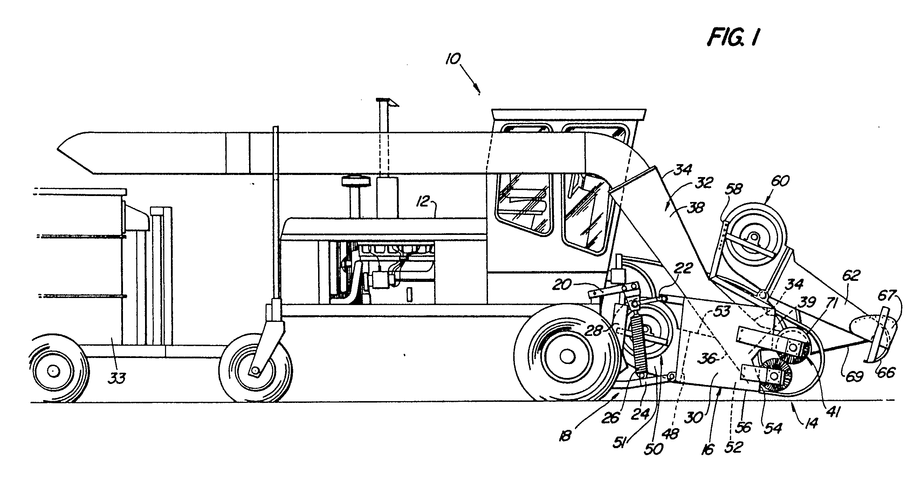

Fig. 1 eine Seitenansicht der Saatgut-Erntemaschine,
Fig. 2 eine Vorderansicht der Saatgut-Erntemaschine,
Fig. 3 eine Teilansicht der Erntebergungswerkzeuge der Saatgut-Erntemaschine,
Fig. 4 eine Teilansicht der schneckenartig ausgebildeten Saatgut-Erntewerkzeuge,
Fig. 5 eine schematische Darstellung der Frontansicht eines weiteren Ausführungsbeispiels eines Erntewerkzeuges,
Fig. 6 eine Ansicht zweier zusammenwirkender Erntebergungswerkzeuge gemäss Fig. 5,
Fig. 7 einen Schnitt entlang der Linie 7–7 gemäss Fig. 6,
Fig. 8 ein anderes Ausführungsbeispiel eines Erntebergungswerkzeuges mit schneckenförmig ausgebildeten Rotoren.

In der Zeichnung ist mit 10 eine Erntebergungsmaschine, insbesondere eine Saatgut-Erntemaschine bezeichnet, die ein Fahrgestell 12 sowie eine vertikal einstellbare Erntebergungsvorrichtung 14 mit einem Gehäuse 16 aufweist. Die Erntebergungsvorrichtung 14 ist über eine Kupplungsvorrichtung 18 an die vordere Seite des Gehäuses 16 angeschlossen. Kupplungsvorrichtung 18 kann aus einem oder mehreren oberen Lenkern 20 bestehen, die an die vorderen Enden von Tragarmen 22 gelenkig angeschlossen sind. Die Kupplungsvorrichtung 18 weist ferner einen oder mehrere untere Lenker 24 auf, die ebenfalls gelenkig an das Fahrgestell 12 und an das Gehäuse 16 der Erntebergungsvorrichtung 14 angeschlossen sind. Die oberen und unteren Lenker 20 und 24 sind über Federn 26 miteinander verbunden.

Die Erntebergungsvorrichtung 14 kann über Hydraulikzylinder 28 angehoben bzw. abgesenkt werden, die hierzu einenends an das Fahrgestell 12 und anderenends an die Lenker 20 angeschlossen sind. Die Hydraulikzylinder 28 sind über in der Zeichnung nicht dargestellte Hydraulikleitungen mit einer entsprechenden hydraulischen Stellvorrichtung bzw. Hydromotor verbunden.

Das Gehäuse 16 der Erntebergungsvorrichtung 14 besteht aus Seitenwänden 30, die an ihren hinteren Enden über eine in der Zeichnung jedoch nicht dargestellte quer verlaufende Wand verbunden sind, an die die Lenker 24 angeschlossen sind. An das Gehäuse 16 ist ein Förderkanal 32 angeschlossen, der zur Aufnahme und Weiterleitung des von den Halmen abgestreiften Erntegutes dient. Der Förderkanal 32 transportiert das aufgenommene Erntegut in einen sich an den Förderkanal 32 anschliessenden Sammelbehälter 33, der auch als Ladewagen ausgebildet sein kann. Der Ladewagen ist an das hintere Ende des Fahrgestells 12 der Saatgut-Erntemaschine 10 angeschlossen. Der Förderkanal 32 besteht aus einer oberen Wand 34 sowie einem Boden 36 und Seitenwänden 38. Die Seitenwände 38 liegen flach gegen die Seitenwände 30 des Gehäuses 16 an. Der Aufnahmeteil bzw. die Einlassöffnung 39 erstreckt sich zwischen den Seitenwänden 38 der Erntebergungsvorrichtung 14, und zwar unmittelbar bis hinter die Abstreifvorrichtung 41, die ein Teil der Erntebergungsvorrichtung 14 ist.

Im hinteren Bereich des Gehäuses 16 ist ein erstes Gebläse 50 vorgesehen, das einen einen Überdruck aufweisenden Luftstrom erzeugt. Das Gebläse 50 kann beliebig ausgebildet sein und aus einem Gebläserad mit einem Gehäuse 51 bestehen. Das Gehäuse 51 weist eine Auslassöffnung 48 auf, die mit einem Kanal 52 in Verbindung steht, der in die Einlassöffnung des Förderkanals 32 mündet und mittels der Förderluft hinter der Abstreifvorrichtung 41 einen gewissen Unterdruck erzeugt. Der Kanal 52 wird aus den Seitenwänden 30 der Erntebergungsvorrichtung 14 einer oberen Wand 53 sowie einer in etwa vertikal verlaufenden Stirnwand 54 sowie einem zwischen den Seitenwänden 30 vorgesehenen Boden 56 gebildet. Die Stirnwand 54 bildet eine Deflektorwand bzw. Leitvorrichtung zur Richtungsänderung der Strömungsluft. Die Einlassöffnung des Förderkanals 32 wird aus einer kurzen Bodenplatte 56 sowie der Stirnwand 54 gebildet. Zwischen der Oberfläche der Bodenplatte 56 und der Stirnwand 54 verbleibt ein kleiner Spalt 55, durch den die Luft bewegt wird. Der Luftstrom nimmt das mittels der Abstreifvorrichtung 41 geerntete Erntegut auf und befördert es in den Sammelbehälter 33.

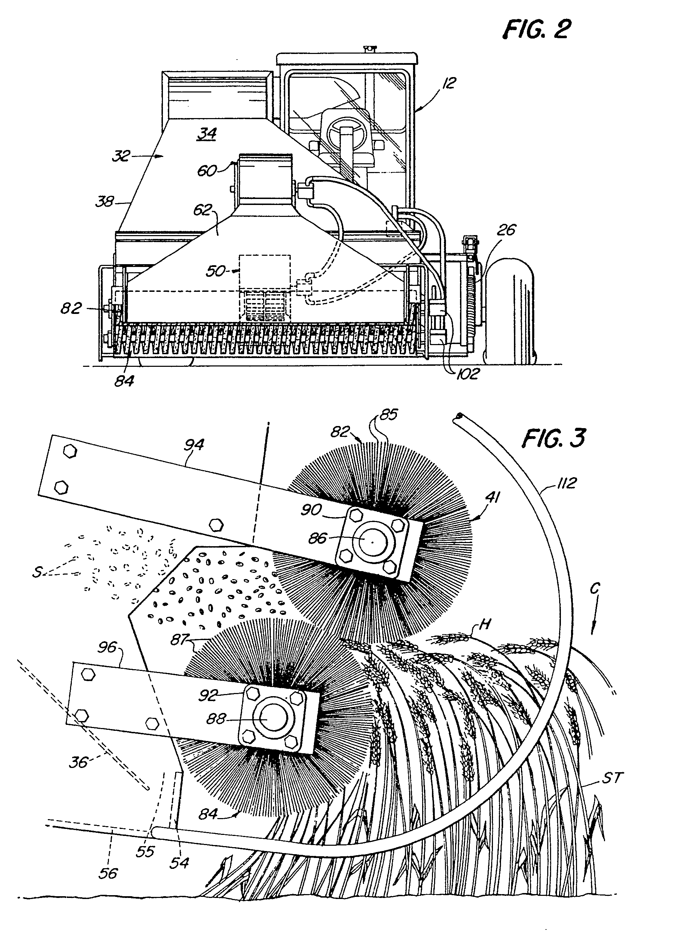

In einem Rahmen 58 oberhalb des Gehäuses 16 im Bereich des Einlassendes der Erntebergungsvorrichtung 14 befindet sich ein zweites Gebläse 60, mittels dem ebenfalls ein Luftstrom erzeugt wird, der nach hinten und in Richtung der Abstreifvorrichtung 41 gerichtet ist. Das Gebläse 60 weist einen Gebläsekanal 62 auf, der an seinem vorderen Ende mit einer gebogenen Leitvorrichtung 66 ausgerüstet ist, die den Luftstrom nach hinten leitet. Die Leitvorrichtung 66 ist mittels Seitenteilen 67 verstellbar an dem Gebläsekanal 62 angeschlossen, so dass die Neigung der Leitvorrichtung entsprechend variiert werden kann. Der Luftstrom im Gebläsekanal 62 wird nach unten und hinten gegen die Ähren bzw. Halme des Erntegutes vor der Abstreifvorrichtung 41 geleitet, um die Halme ST nach hinten zu drücken und die Ähren H des Erntegutes C in eine entsprechende Lage (Fig. 3) zu bringen, so dass sie von der Abstreifvorrichtung 41 einwandfrei erfasst werden können. Der Luftstrom wird dabei konzentriert in Richtung des Erntegutes über die Leitvorrichtung 69 geleitet, die sich von der Leitvorrichtung 66 zu einem Gehäuse bzw. einer Haube 71 erstreckt, die den oberen Teil der Abstreifvorrichtung 41 teilweise umgibt.

Die Abstreifvorrichtung weist einen oberen und einen unteren Rotor 82, 84 auf, die mit Bezug auf die Förderrichtung des Erntegutes auf quer verlaufenden Achsen 86, 88 angeordnet sind. Die Rotoren 82, 84 weisen entsprechende Abstreifelemente auf, bzw. sind als rotierende Bürsten ausgebildet, die die Körner von den Ähren abstreifen.

Die in Fig. 3 als rotierende Borsten 85 und 87 ausgebildeten Rotoren 82 und 84 können beispielsweise aus relativ widerstandsfähigen bzw. steifen Kunststoffborsten, wie z.B. Polyäthylenborsten gebildet sein. Die einzelnen Borsten 85, 87 sind so lang und weisen an ihren radialen äusseren Enden untereinander einen derart grossen Abstand auf, dass sie eine entsprechende widerstandsfähige Aussenoberfläche bilden, die, wenn sie mit dem Erntegut in Kontakt kommt, die einzelnen Körner von den Ähren entsprechend abstreift. Die Enden der Borsten können beispielsweise einen Abstand untereinander aufweisen, der zwischen 1,25 cm und 3,08 cm liegt. Die im Ausführungsbeispiel dargestellten Borsten 85 und 87 können einen kreisrunden bzw. einen ovalen Querschnitt aufweisen. Die einzelnen Borsten können gewellt bzw. gekräuselt oder geriffelt oder auf ähnliche Weise ausgebildet sein. Die die Rotoren 82 und 84 aufnehmenden Achsen 86 und 88 sind endseitig in Lager 90 und 92 beiderseits des Gehäuses 16 aufgenommen. Die oberen Lager 90 des oberen Rotors 82 sind an den vorderen Enden von verstellbaren Tragarmen 94 und die unteren Lager des unteren Rotors 84 in unteren verstellbaren Tragarmen 96 angeordnet. Mittels der Tragarme 94 und 96 können die Rotoren 82 und 84 unabhängig voneinander angehoben bzw. abgesenkt werden, um auf diese Weise die Abstreifvorrichtung 41 der unterschiedlichen Höhe des Erntegutes anzupassen. Der Durchmesser der Rotoren 82, 84 kann beliebig gewählt werden. Vorzugsweise weisen die Rotoren einen Durchmesser auf, der zwischen 15 und 20 cm liegt.

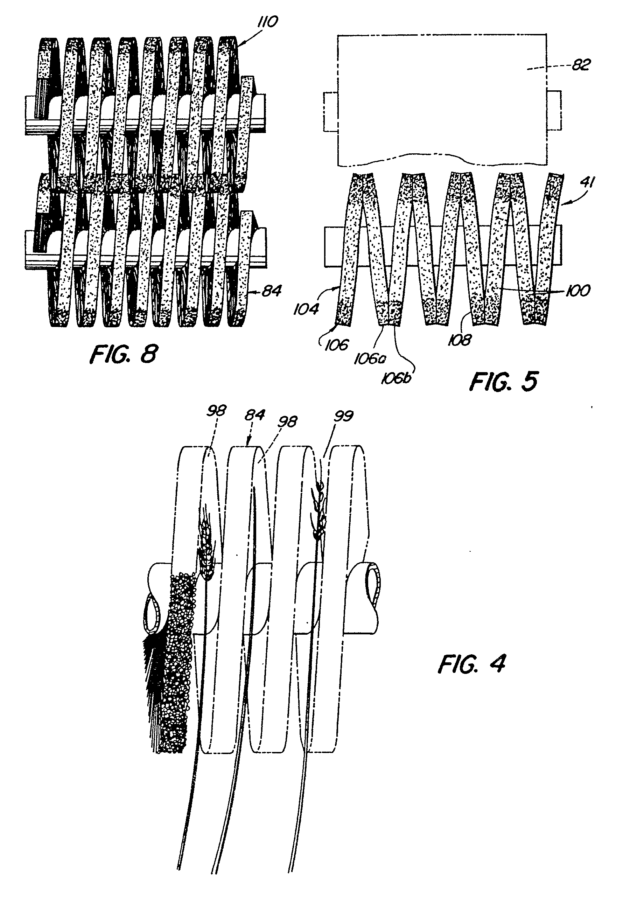

Der untere Rotor 84 besteht aus einzelnen nebeneinander in einer Reihe gruppenförmig angeordneten Borsten, so dass sie ein durchgehendes Band bilden und mit Bezug auf die Achse des Rotors etwas geneigt verlaufend angeordnet sind. Im Ausführungsbeispiel gemäss Fig. 4 wandert das Band 98 mit Bezug auf die Bewegungsrichtung der Saatgut-Erntemaschine nach einer Seite, d.h. quer zur Fahrtrichtung. Tritt beispielsweise das Erntegut in einen zwischen zwei Bändern 98 gebildeten Zwischenraum 99, so nähert sich das sich drehende Band 98 der entsprechenden Ähre und wirkt von unten nach oben auf diese ein, da der entsprechende Teil des Bandes 98 im Arbeitseinsatz sich nach oben bewegt (Fig. 4). Somit wird intensiv einseitig auf die Ähre eingewirkt, und zwar in Richtung des zugehörigen Stengels, so dass auf einfache Weise das Saatgut aus der Ähre herausgelöst werden kann. Das aus der Ähre herausgelöste Saatgut wird dann über die Borsten des Rotors 84 nach oben und hinten gefördert. Da sich die Saatgut-Erntemaschine weiter nach vorne bewegt, wird der Stengel mittels des Zwischenraumes 99 zur Seite bewegt und verlässt im Bereich des unteren Teiles des Rotors wieder den Zwischenraum 99. Dabei bleiben Stengel und Ähre mit dem Boden fest verwurzelt. In vorteilhafter Weise ist der Zwischenraum bzw. Spalt 99 grösser als der Durchmesser der Ähre, um dadurch zu verhindern, dass die Ähre von dem Halm abgetrennt wird.

Die Ähren liegen bzw. enden oberhalb des unteren Rotors 84. Sie werden dadurch von einer widerstandsfähigen Aussenoberfläche der Borsten 85 des oberen Rotors erfasst, wobei die Körner aus den Ähren herausgestreift werden. Um das Herauslösen des Saatgutes aus den Ähren noch zu verbessern, liegt der nach oben gerichtete äussere Teil des Rotors 84 und insbesondere die zugehörige Achse 88 unterhalb der Ähren, d.h. des Saatgutes der auf dem Felde befindlichen Ähren. Die Achse 86 des oberen Rotors 82 liegt oberhalb des Saatgutes bzw. der entsprechenden Ähren. Wie insbesondere aus Fig. 3 hervorgeht, endet die vordere äussere Begrenzung der Borsten 85 des oberen Rotors 82 vor den Borsten 87 des unteren Rotors 84. Somit können die Borsten 85 des oberen Rotors 82 schon ohne weiteres die etwas höher stehenden Ähren erfassen, die sich aufgrund des Luftstromes des Gebläses 60 in einer geneigt verlaufenden Lage befinden. Die Ähren werden in einer derartigen Lage mittels des oberen Rotors 85 gehalten bzw. noch weiter geneigt.

Der Luftstrom des Gebläses 60 wird durch die Saugluft aus dem unteren Gebläse 50 unterstützt. Ferner wird durch die grosse Umfangsgeschwindigkeit der Rotoren ein zusätzlicher Luftstrom erzeugt. Somit wird das Erntegut mittels des nach hinten geleiteten Luftstroms des Gebläses 60 einerseits nach hinten gedrückt und andererseits über die Saugluft des unteren Gebläses sowie durch die Borsten 85 und 87 nach hinten gezogen.

In dem einen Ausführungsbeispiel beträgt der Durchsatz des Gebläses 60 zirka 2,17 m³/sec, wobei eine Strömungsgeschwindigkeit am Auslass des Gebläsekanals 62 von 44 m/sec erzeugt wird, während an der Frontseite der Rotoren 82 und 84 eine Strömungsgeschwindigkeit von 20 m/sec herrscht. Das untere Gebläse 50 erzeugt einen Durchsatz von 2,05 m³/sec, und der Luftstrom des unteren Gebläses gelangt durch den Spalt 55 mit einer Strömungsgeschwindigkeit von 30 m/sec.

Das abgestreifte Saatgut wird mittels der Rotoren 82 und 84 nach hinten gefördert und dann von dem Förderluftstrom aufgenommen, der durch die beiden Gebläse 50 und 60 bzw. durch die Rotoren 82 und 84 erzeugt wird. Die Rückseite des unteren Rotors 84 ist so plaziert, dass der Luftstrom des unteren Gebläses 50 an der Oberfläche des Rotors entlangstreicht, bis er in den Kanal 32 gelangt und dabei Erntegut mitnimmt, das von dem übrigen Luftstrom nicht erfasst bzw. wieder abgegeben worden ist.

Besonders vorteilhaft ist es, wenn die Rotoren bzw. die Enden der Borsten 85 und 87 eine Lineargeschwindigkeit zwischen 18 und 27 m/sec aufweisen. Besonders vorteilhaft ist auch eine Geschwindigkeit zwischen 21 und 23 m/sec. Hierdurch wird das Abstreifen der Körner aus den Ähren und der Weitertransport der Körner in den Sammelbehälter 33 sehr vorteilhaft beeinflusst. Wird diese Geschwindigkeit jedoch überschritten, so kann das Erntegut aus dem Luftstrom herausgeschleudert werden, so dass ein relativ grosser Verlust eintreten kann. Bei geringeren Geschwindigkeiten ist die Einwirkung der Luft auf den Abstreifvorgang so gering, dass ein grosser Anteil der Körner in den Ähren verbleibt.

Die Rotoren 82 und 84 werden durch besondere Motoren angetrieben, die auf einer Seite der Erntebergungsvorrichtung 14 vorgesehen sind und beispielsweise über ein hydraulisches System, das im Fahrgestell 12 untergebracht ist, beaufschlagt werden. Die Motoren 102, die also als Hydromotoren ausgebildet sein können, sind in Serie bzw. Reihe geschaltet, so dass Leckverluste aus dem ersten Hydromotor von dem zweiten Hydromotor aufgenommen werden, bevor es in den Sammelbehälter zurückkehrt. Hierdurch wird der obere Rotor 82 mit einer etwas grösseren Geschwindigkeit angetrieben als der untere Rotor.

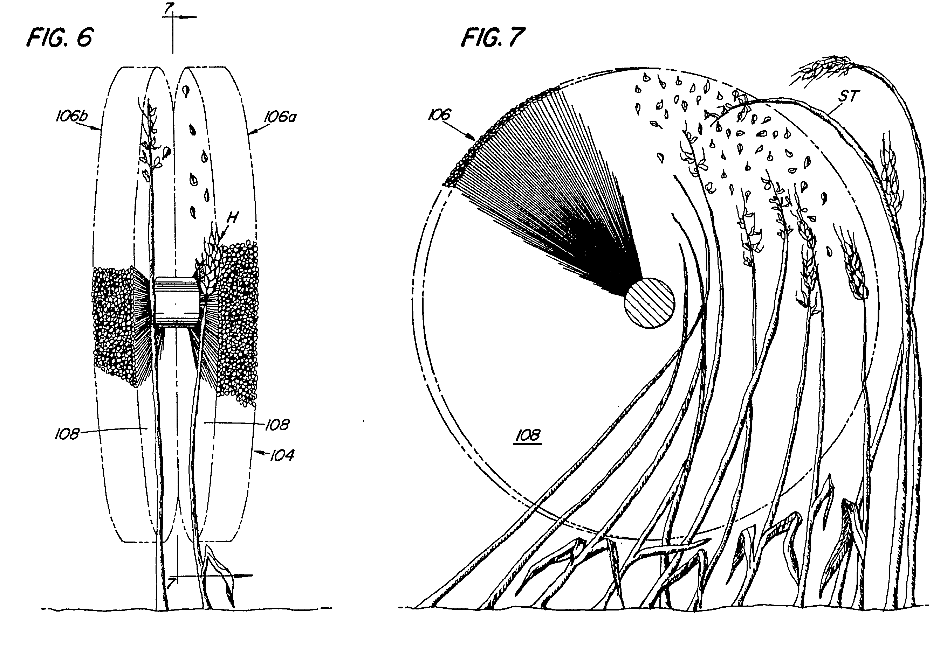

In einem anderen Ausführungsbeispiel (Fig. 5 bis 7) besteht der Rotor 104 aus zahlreichen scheibenartig ausgebildeten Abstreifwerkzeugen mit Borsten 106, die in etwa den Borsten 85 und 87 in den anderen Ausführungsbeispielen entsprechen. Die Borsten 106 bilden mit der Drehachse des Rotors einen positiven bzw. negativen spitzen Winkel. Die beiden nebeneinanderliegenden bürstenartigen Scheiben 106 A und 106 B erstrecken sich von der Drehachse nach aussen, d.h. sie sind konvergierend angeordnet, so dass sie eine spaltförmige Öffnung bilden. Die einander gegenüberliegenden Seiten 108 der scheibenartigen Borsten 106 A und B bilden eine durchgehende Oberfläche bzw. eine kreisförmige Scheibe, die ähnlich auf das Erntegut einwirkt wie die Borsten 87 des Rotors 84. Durch Drehen des Rotors 104 wird die entsprechende Seite 108 der scheibenförmigen Borsten mit Bezug auf das Erntegut etwas zur Seite bewegt.

Durch die Einwirkung der Seite 108 gegen die Aussenseite der Ähre wird eine reibende Wirkung in Stengelrichtung an der Ähre erzeugt, die der Reibwirkung der Oberfläche des Bandes 98 des Rotors 84 entspricht. Der divergierende bzw. aussen liegende Teil 100 des Rotors 104 bildet einen Spalt, dessen Breite grösser ist als die Dikke der Ähren, so dass beim Abstreifen des Erntegutes von den Ähren die Ähren nicht von den Stengeln mittels der Borsten 87 abgezogen werden.

Es hat sich herausgestellt, dass durch die auseinanderlaufenden Scheiben des Rotors 104 der Erntewirkungseffekt, insbesondere bei kurzstengligem Erntegut, grösser ist als bei den schneckenförmig verlaufenden Bändern des Rotors 84, die vorzugsweise bei langstengligem Erntegut eingesetzt werden.

Der obere Rotor 82 besteht aus einer durchgehenden Bürste, die jedoch gemäss Fig. 8 durch eine Bürste ersetzt werden kann (siehe Fig. 8), die ebenfalls, wie der Rotor 84, aus einem schnekkenförmig ausgebildeten Band bestehen kann. Der Rotor 110 streift auf ähnliche Weise das Erntegut aus den Ähren wie bei den eingangs beschriebenen Abstreifvorrichtungen 41. Durch den früheren Kontakt des Rotors 110 vor dem Kontakt des unteren Rotors 84 mit dem Erntegut wird das Erntegut durch die entsprechende Einwirkung der Oberfläche auf die Ähren relativ früh herausgelöst. Dabei ist es vorteilhaft, dass die Achse des oberen Rotors 110 so eingestellt werden kann, dass die oberen Enden der Ähren unterhalb der Achse des Rotors liegen, um beim Kontakt des oberen Rotors mit den Ähren diese in die richtige Richtung zu drücken. Die Erntebergungsvorrichtung 14 ist mit entsprechenden Halmteilern 112 ausgerüstet, die, bevor das Erntegut von den Abstreiforganen erfasst wird, eine entsprechende Aufteilung des Erntegutes vornehmen, das von den Rotoren bearbeitet werden soll.

Nähern sich die Ähren H dem oberen Rotor 82, so werden die grösseren Stengel ST nach hinten und unten gebogen bzw. gedrückt, und zwar erstens durch den oberen Rotor 82, zweitens durch die Gebläseluft des Gebläses 60 sowie durch die Saugwirkung des unteren Gebläses 50 und drittens durch die Luft, die durch die beiden zusammenwirkenden Rotoren 82 und 84 erzeugt wird. Die meisten Ähren werden dann durch den unteren Rotor 84 behandelt bzw. bearbeitet, wenn die Ähren in den Zwischenraum 99 der beiden Rotoren 82 und 84 gelangen. Da die Oberfläche des Bandes 98 sich zur Seite bewegt, wenn die Saatgut-Erntemaschine über das Feld fährt, wirkt die Oberfläche des Bandes 98 in Längsrichtung des Halmes auf die Ähre ein, so dass die Saatkörner aus den Ähren herausgelöst werden. Das Saatgut wird dadurch nach hinten bewegt, und zwar in den Förderluftstrom, der durch das Gebläse 60 bzw. die beiden Rotoren 82 und 84 erzeugt wird. Die einzelnen Ähren bzw. Stengel bleiben bei diesem Erntevorgang im Boden verwurzelt und werden aus dem Zwischenraum 99 wieder herausgelöst, wenn der Rotor sich entsprechend weiterdreht.

Wird beispielsweise der Rotor 104 mit den konvergierend zueinander angeordneten scheibenartigen Borsten eingesetzt, so wird auf ähnliche Weise das Saatgut herausgelöst, wenn die Seite 108 gegen die entsprechenden Ähren trifft. Der obere Rotor 110 drückt dabei das Erntegut bzw. die Ähren nach hinten und unten und streift dabei das Saatgut aus den Ähren heraus, das dann in den entsprechenden Luftstrom gelangt, über den das Saatgut in den Sammelbehälter 33 gefördert wird.

Die Bürstengeschwindigkeit des zuletzt beschriebenen Rotors 104 kann zwischen 18 und 27 m/sec bzw. in vorteilhafter Weise auch zwischen 21 und 23 m/sec liegen. Dasjenige Saatgut, das nicht direkt in den Luftstrom gelangt, wird dann durch den entsprechenden Luftstrom des unteren Gebläses 50 erfasst, das das Saatgut in den Förderluftstrom im Förderkanal 32 zurückführt.

Das aufgesammelte bzw. geerntete Saatgut wird über den Förderkanal 32 in den Sammelbehälter 33 abgegeben.

Als besonders vorteilhaft wird die Verwendung der rotierenden Bürsten angesehen, die seitlich und in Richtung der Halme auf die Ähren einwirken und dabei das Saatgut aus den Ähren lösen. Ferner ist es besonders vorteilhaft, dass die einzelnen Arbeitsorgane zum Abstreifen der Körner aus den Ähren mit unterschiedlichen Geschwindigkeiten angetrieben werden können.

## Patentansprüche

1. Erntebergungsvorrichtung für eine Saatgut-Erntemaschine mit einem ersten auf einer mit Bezug auf die Förderrichtung quer verlaufenden Achse (86) drehbar gelagerten Rotor (82), der mit als Abstreiforgane ausgebildeten, sich radial erstreckenden Borsten (85) ausgerüstet ist und mit sich radial erstreckenden Borsten (87) eines zweiten auf einer parallel zur ersten Achse (86) verlaufenden Achse (88) angeordneten Rotors (84) zusammenwirkt, dadurch gekennzeichnet, dass die Borsten (85, 87) der beiden Rotoren (82, 84) kreisförmige, nebeneinanderliegende Scheiben oder ein spiralförmiges Band (98) bilden, die zur Aufnahme des Saatgutes mit jeweils der benachbarten Scheibe bzw. dem Bandteil Zwischenräume (99) aufweisen, wobei die Borsten der Scheiben oder des Bandes derart dicht nebeneinander angeordnet sind, dass sie eine durchgehende Oberfläche bilden.

2. Vorrichtung nach Anspruch 1, dadurch gekennzeichnet, dass die Achse des ersten oberen Rotors (82) etwas vor der Achse (88) des unteren bzw. zweiten Rotors (84) liegt.

3. Vorrichtung nach Anspruch 1 und 2, dadurch gekennzeichnet, dass hinter den beiden aus Borsten (85, 87) gebildeten Rotoren (82, 84) ein über ein oder mehrere Gebläse (50, 60) mit Förderluft beaufschlagbarer Förderkanal (32) vorgesehen ist, der mit einem Sammelbehälter (33) in Verbindung steht.

4. Vorrichtung nach einem oder mehreren der vorhergehenden Ansprüche, dadurch gekennzeichnet, dass die Seitenwände (108) jeweils zweier aus den Borsten (85, 87) gebildeter, eine durchgehende, kreisförmige Oberfläche aufweisender Scheiben einen keilförmigen Einlassspalt zur Aufnahme des Erntegutes bilden.

5. Vorrichtung nach einem oder mehreren der vorhergehenden Ansprüche, dadurch gekennzeichnet, dass die Rotoren (82, 84) gegenläufig mit einer Umfangsgeschwindigkeit zwischen 18 und 27 m/sec angetrieben werden.

6. Vorrichtung nach einem oder mehreren der vorhergehenden Ansprüche, dadurch gekennzeichnet, dass die einzelnen Scheiben starr oder über ein Taumelscheibengetriebe mit der Achse (88) verbunden sind, so dass die Scheiben gegenüber der Achse (88) relativ bewegbar sind.

## Claims

1. A crop picking apparatus for a corn harvester comprising a first rotor (82) which is mounted rotatably on a spindle (86) extending transversely with respect to the conveying direction, which rotor (82) is provided with radially extending bristles (85) formed as stripper members and co-operates with radially extending bristles (87) of a second rotor (84) arranged on a spindle (88) extending parallel to the first spindle (86), characterised in that the bristles (85, 87) of the two rotors (82, 84) form circular juxtaposed discs or a helical strip (98) which, to accommodate the corn, have intermediate spaces (99) with the respective adjacent disc or portion of the strip, wherein the bristles of the discs or the strip are arranged in closely juxtaposed relationship in such a way that they form a continuous surface.

2. Apparatus according to claim 1, characterised in that the spindle of the first upper rotor (82) is disposed somewhat in front of the spindle (88) of the lower or second rotor (84).

3. Apparatus according to claim 1 and claim 2, characterised in that disposed rearwardly of the two rotors (82, 84) formed from bristles (85, 87) is a conveyor passage (32) which can be supplied with conveying air by way of one or more blowers (50, 60) and which communicates with a collecting container (33).

4. Apparatus according to one or more of the preceding claims, characterised in that the side walls (108) of each two discs which are formed from the bristles (85, 87) and which have a continuous circular surface form a wedge-shaped inlet gap for accommodating the crop material.

5. Apparatus according to one or more of the preceding claims, characterised in that the rotors (82, 84) are driven in opposition at a peripheral speed of between 18 and 27 metres/second.

6. Apparatus according to one or more of the preceding claims, characterised in that the individual discs are connected to the spindle (88) rigidly or by way of a swash plate transmission so that the discs are relatively movable with respect to the spindle (88).

**Revendications**

1. Dispositif de récolte pour machine à récolter les semences, comportant un premier rotor (82) monté à rotation sur un axe (86) orienté transversalement par rapport à la direction de transport et équipé de poils de brosse (85) s'étendant radialement, agencés à la manière d'organes séparateurs et coopérant avec les poils de brosse (87) orientés radialement d'un second rotor (84) monté sur un axe (88) s'étendant parallèlement au premier axe (86), caractérisé en ce que les poils de brosse (85, 87) des deux rotors (82, 84) forment des disques circulaires disposés l'un à côté de l'autre ou une bande en hélice (98) qui, pour la réception des produits de récolte, ménagent chaque fois des intervalles (99) avec le disque voisin ou la partie de bande voisine, les poils de brosse des disques ou de la bande étant disposés selon une proximité relative telle qu'ils forment une surface continue.

2. Dispositif suivant la revendication 1, caractérisé en ce que l'axe du premier rotor ou rotor supérieur (82) se trouve un peu en avant de l'axe (88) du rotor inférieur ou second rotor (84).

3. Dispositif suivant les revendications 1 et 2, caractérisé en ce qu'il est prévu, derrière les deux rotors (82, 84) formés par des poils de brosse (85, 87), une gaine de transport (32) alimentée en air de transport par un ou plusieurs ventilateurs (50, 60) et qui est en communication avec un réceptacle collecteur (33).

4. Dispositif suivant une ou plusieurs des revendications précédentes, caractérisé en ce que les parois latérales (108) chaque fois de deux disques présentant une surface circulaire continue formée par les poils de brosse (85, 87) ménagent un interstice d'entrée cunéiforme pour la réception des produits de récolte.

5. Dispositif suivant une ou plusieurs des revendications précédentes, caractérisé en ce que les rotors (82, 84) sont entraînés en sens opposés avec une vitesse périphérique entre 18 et 27 m/sec.

6. Dispositif suivant une ou plusieurs des revendications précédentes, caractérisé en ce que les disques individuels sont reliés à l'axe (88) de façon rigide ou par l'intermédiaire de mécanismes à plateau à mouvement de nutation, de sorte que les disques sont déplaçables par rapport à l'axe (88).

FIG. 1

**FIG. 2**

**FIG. 3**

0 094 036

FIG. 8

FIG. 5

FIG. 4

13

FIG. 7

FIG. 6